# DEMANDE DE BREVET EUROPEEN

(11) **EP 4 467 290 A1**
(43) Date de publication de la demande: **27.11.2024**
(21) Numéro de dépôt: 24177854.7
(22) Date de dépôt: 24.05.2024
(51) Int. Cl.: B25B 21/00, B25B 23/14, B25B 23/142, B25B 23/147, B23P 19/06

(54) **PROCÉDÉ D'INSTALLATION ASSERVIE D'UNE FIXATION FILETÉE**

(30) Priorité: 26.05.2023 FR 2305258
(71) Demandeur: LISI Aerospace, 75012 Paris (FR)
(72) Inventeur: REGNARD, Benoit, 78340 LES CLAYES SOUS BOIS (FR); ROUSSEAU, Clément, 75012 PARIS (FR)
(74) Mandataire: Lavoix

(57) **Abrégé**

L'invention porte sur un procédé d'installation d'une fixation (10) filetée dans une structure, la fixation filetée comprenant une vis (20) et un écrou (28), le procédé comprenant les étapes de :
a) insertion de la vis dans la structure, et vissage de l'écrou sur la vis,
b) émission / réception simultanée d'ondes ultrasonores dans la fixation, et mesure d'un paramètre représentatif d'une variation desdites ondes, ledit premier paramètre fournissant une mesure indirecte d'une tension axiale dans la vis,
c) arrêt du vissage quand une valeur cible du premier paramètre est atteinte.

Le procédé comporte en outre la détermination d'une épaisseur de structure à serrer, et la détermination de la valeur cible du premier paramètre en fonction de l'épaisseur de structure à serrer et de caractéristiques géométriques de la fixation (10).

## Description

La présente invention concerne un procédé d'installation d'une fixation filetée dans un perçage d'une structure, la fixation filetée comprenant une vis et un écrou, le procédé comprenant les étapes de : a) insertion de la vis dans le perçage, et vissage de l'écrou sur la vis ; b) émission simultanée d'ondes ultrasonores dans la fixation, réception d'ondes ultrasonores réfléchies et mesure d'un premier paramètre représentatif d'une variation desdites ondes, ledit premier paramètre fournissant une mesure indirecte d'une tension axiale dans la vis ; c) arrêt du vissage quand une valeur cible du premier paramètre est atteinte.

Un tel procédé, notamment décrit dans le document EP1570956, permet d'asservir l'installation d'une fixation filetée à une tension cible, en mesurant par exemple la variation du temps de vol d'ondes ultrasonores émises et reçues dans la vis, le temps de vol fournissant une mesure indirecte de la tension axiale dans la vis, celle-ci étant allongée sous l'effet de la tension.

Lors du serrage de la structure entre la tête de vis et l'écrou, la vis est soumise à un allongement. Deux vis de même longueur peuvent être utilisées pour assembler des structures d'épaisseurs différentes, et la tension effectivement installée dans la vis dépend de l'épaisseur serrée. Or une tension cible pour une vis donnée ne tient pas compte de l'épaisseur effectivement serrée.

Par ailleurs, le serrage de l'écrou sur la vis échauffe la vis, l'augmentation de température amplifiant l'allongement de la vis et donc diminuant sa tension axiale. Le temps de vol d'une onde ultrasonore injectée dans la vis pendant le vissage est donc modifié, ce qui altère l'estimation de la tension réellement installée dans la vis.

La présente invention a pour but de proposer un procédé d'installation asservie d'une fixation filetée qui corrige les variations de mesure de la tension installée dues aux épaisseurs réellement serrées, et aux échauffements.

A cet effet, l'invention a pour objet un procédé du type précité comprenant en outre les étapes suivantes : d) détermination d'une épaisseur de structure à serrer ; et e) détermination de la valeur cible du premier paramètre en fonction de l'épaisseur de structure à serrer et de caractéristiques géométriques de la fixation.

Suivant d'autres aspects avantageux de l'invention, le procédé comporte l'une ou plusieurs des caractéristiques suivantes, prises isolément ou suivant toutes les combinaisons techniquement possibles :
- le premier paramètre est choisi parmi : un temps de vol d'une onde ultrasonore longitudinale ; un décalage de fréquence de résonance de la vis ; et un ratio du temps de vol d'une onde ultrasonore longitudinale ou transversale sur l'épaisseur de structure à serrer ;
- les caractéristiques géométriques de la fixation sont choisies parmi : une longueur de la vis, une longueur d'une portion filetée de la vis, un pas de filetage de la vis, une longueur d'écrou, une longueur de chambrage d'écrou, une longueur de taraudage de l'écrou et une distance entre une surface d'extrémité de l'écrou et au moins un point de freinage ;
- la détermination de la valeur cible du premier paramètre comprend la comparaison de l'épaisseur de structure à un ensemble de valeurs d'épaisseur, ledit ensemble de valeurs d'épaisseur étant associé à un ensemble de valeurs cibles du premier paramètre pour une vis donnée, correspondant à un ensemble de tensions cibles pour une vis donnée ;
- la détermination de l'épaisseur de structure comprend une étape de détection d'un début de serrage de la structure, correspondant à l'apparition d'une tension axiale dans la vis ;
- l'étape de vissage est effectuée avec un dispositif de pose muni d'un moteur électrique, le procédé comprenant en outre : la mesure d'un deuxième paramètre représentatif d'une variation d'énergie du moteur électrique en fonction du temps ; et la détection du début de serrage, ledit début de serrage correspondant à une variation prédéterminée du deuxième paramètre ;
- le deuxième paramètre est choisi parmi une intensité du moteur électrique et un couple d'un arbre moteur ;
- la détermination de l'épaisseur de structure comprend une étape de détection de la position initiale de l'écrou sur la vis ;
- l'étape de détection de la position initiale de l'écrou comprend les étapes suivantes : mise en contact d'un élément métallique annulaire avec une surface annulaire de l'écrou, un diamètre intérieur de l'élément métallique annulaire étant inférieur à un diamètre intérieur de la surface annulaire de l'écrou ; détection d'un contact entre l'élément métallique annulaire et la surface annulaire de l'écrou ; entrainement en rotation de l'écrou sur la portion filetée de la vis, et application d'une pression sur l'élément métallique annulaire de sorte à maintenir le contact avec la surface annulaire de l'écrou ; détection d'une perte de contact entre l'élément métallique annulaire et la surface annulaire de l'écrou dès qu'une extrémité de la portion filetée traverse le diamètre intérieur de la surface annulaire de l'écrou, la détection de la perte de contact correspondant à la position initiale de l'écrou ;
- le procédé comprend en outre la surveillance de la température dans la vis et l'ajustement de la valeur cible du premier paramètre en fonction de la température ;
- au moins un parmi la vis et l'écrou comprend un marquage contenant au moins un identifiant ou une caractéristique géométrique de ladite vis ou ledit écrou, le procédé d'installation comprenant en outre une étape de lecture du marquage et l'identification d'au moins l'identifiant ou la caractéristique géométrique de la vis et/ou de l'écrou, ladite étape de lecture étant réalisée avant l'étape e).

L'invention sera mieux comprise à la lecture de la description qui va suivre, donnée uniquement à titre d'exemple non limitatif et faite en se référant aux dessins sur lesquels :
[Fig 1] la figure 1 est une vue en coupe longitudinale d'une fixation et d'une partie d'un dispositif de pose, la fixation étant apte à être installée par un procédé d'installation selon un mode de réalisation de l'invention, la fixation étant dans une configuration initiale,
[Fig 2] la figure 2 est une vue en coupe longitudinale de la fixation et d'une partie du dispositif de pose dans une configuration intermédiaire,
[Fig 3] la figure 3 est une vue en coupe longitudinale de la fixation de la figure 1 et d'une partie du dispositif de pose, dans une configuration installée,
[Fig 4] la figure 4 est un schéma d'un dispositif de pose apte à être utilisé dans un procédé d'installation selon un mode de réalisation de l'invention,
[Fig 5] la figure 5 est un schéma-bloc illustrant des étapes d'un procédé d'installation selon un mode de réalisation de l'invention,
[Fig 6] la figure 6 est une représentation graphique de données pour la mise en oeuvre du procédé de la figure 5.

Pour faciliter la lecture des dessins, seuls les éléments nécessaires à la compréhension de l'invention ont été représentés. Les mêmes éléments portent les mêmes références d'un dessin à l'autre.

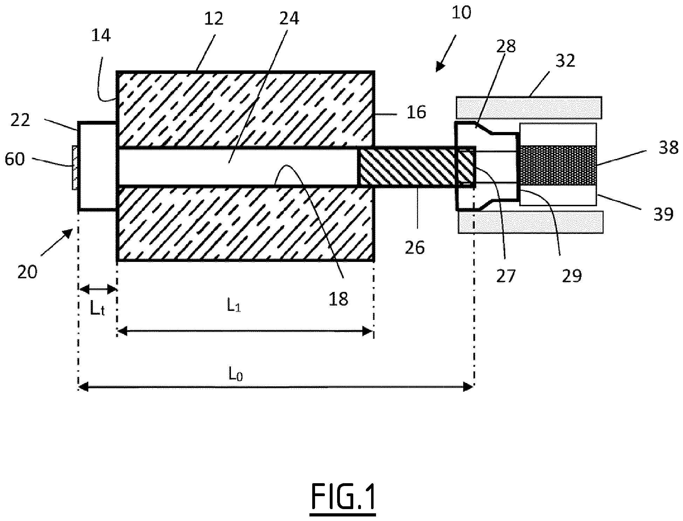

La figure 1 montre une fixation filetée 10 utilisée pour assembler une structure 12 figurée schématiquement en un bloc, pouvant comporter plusieurs éléments distincts à assembler. La structure comprend dans cet exemple une face avant 14, une face arrière 16 et un perçage 18 traversant. La fixation comprend une vis 20 munie d'une tête 22 de longueur Lₜ, d'un corps 24 dont au moins une portion 26 est filetée. La fixation comprend également un écrou 28, de longueur Lₑ, partiellement vissé sur la portion filetée 26. De manière connue, soit la tête 22 de vis soit l'écrou 28 comportent des surfaces d'entraînement permettant d'entrainer respectivement la vis ou l'écrou en rotation.

La vis et l'écrou peuvent facultativement comprendre un marquage 60 d'identification unidirectionnel ou bidirectionnel appliqué sur une portion de la vis, comme la surface d'extrémité de la tête 22 de vis, ou l'extrémité 27 de vis, ou sur une surface de l'écrou. Dans les figures, le marquage 60 est représenté à titre d'exemple sur la tête 22 de la vis, sans que cet exemple soit limitatif.

Dans la position de la fixation 10 visible sur la figure 1, la fixation 10 est considérée dans un état initial : aucune tension n'est installée dans la vis, l'écrou étant à distance de la face arrière 16 de la structure 12. La longueur de la vis à l'état initial, mesurée entre l'extrémité de la tête 22 jusqu'à la l'extrémité 27 est indiquée par la référence L₀. L'épaisseur de structure est indiquée par la référence L₁.

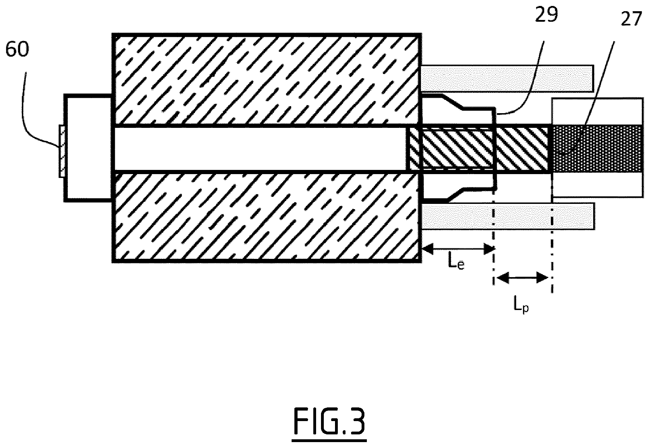

La figure 3 montre la fixation filetée 10 dans une configuration installée, serrant la structure 12. Le dessous de tête de la vis contacte la face avant 14 de la structure 12, tandis que l'écrou 28 contacte la face arrière 16 de la structure 12. Dans une position de serrage, une tension axiale F est installée dans la vis, tandis qu'un effort de compression est installé dans la structure 12.

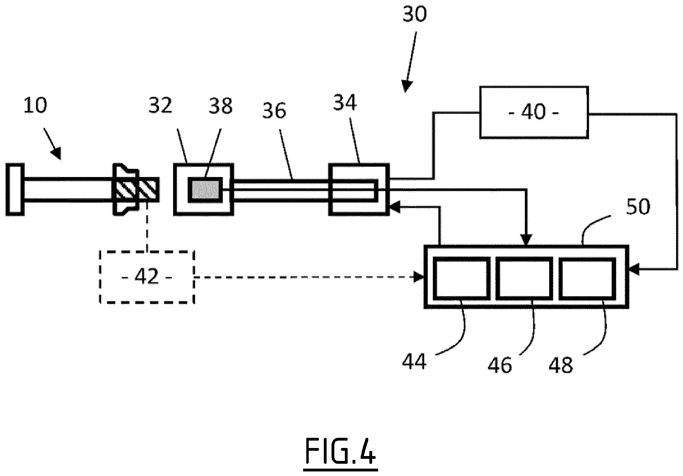

La figure 4 représente un dispositif 30 de pose, approprié à l'installation de la fixation 10 dans la structure 12.

Le dispositif 30 de pose comprend une douille rotative 32, apte à contacter des surfaces d'entraînement prévus sur la tête 22 de la vis ou sur l'écrou 28 et un moteur électrique 34 muni d'un arbre 36, apte à entraîner la douille 32 en rotation.

Le dispositif 30 de pose peut être muni d'un dispositif de génération d'ultrasons 38 comme un transducteur comprenant un composant piézoélectrique configuré pour convertir des signaux électriques en ondes ultrasonores et vice-versa, ou un EMAT (« ElectroMagnetic Acoustic Transducer »).

Dans un mode de réalisation, représenté dans les figures 1 à 3, le dispositif 30 de pose comprend un élément annulaire métallique 39 comme une bague, à l'intérieur duquel est disposé le transducteur 38. La bague 39 et le transducteur 38 sont liés de sorte à former un ensemble, et sont capables d'être translatés ensemble à l'intérieur de la douille 32, sans toutefois tourner avec la douille 32.

Dans cet exemple, la bague 39 a un diamètre intérieur et un diamètre extérieur. La surface arrière de l'écrou forme une surface annulaire, comprenant un diamètre intérieur, correspondant au diamètre du taraudage. Le diamètre intérieur de la bague est conçu pour être inférieur au diamètre du taraudage de l'écrou 28, de sorte que la bague et le dispositif de génération d'ultrasons 38 ne puissent pas translater à l'intérieur du taraudage de l'écrou. Un dispositif de maintien, comme un ressort de compression (non représenté) maintient la bague 39 et l'écrou 29 en appui sur la surface annulaire 29 arrière de l'écrou.

Le diamètre extérieur de la bague est inférieur au diamètre intérieur de la douille 32. Le diamètre extérieur du transducteur 38 est choisi de sorte à correspondre à un diamètre extérieur de la portion filetée 26 de la vis. Un dispositif de détection de contact (non représenté) permet de détecter un contact entre la bague 39 et la surface arrière 29 de l'écrou. Ce dispositif est par exemple un circuit ouvert, un circuit fermé, un dispositif électromagnétique ou un interrupteur.

Le transducteur 38 peut cependant ne pas être disposé dans le dispositif 30 de pose. Par exemple, le dispositif de génération d'ultrasons peut être apposé sur l'extrémité 27 de la vis.

Le moteur 34 est préférentiellement muni d'un ampèremètre 40 pour mesurer l'intensité du courant utilisé par le moteur pour visser l'écrou. Alternativement, le moteur est muni d'un capteur 40 de couple capable de mesurer le couple de l'arbre moteur. Un capteur 42 de la température de la vis peut être utilisé en complément de l'outil, comme il le sera décrit ultérieurement.

Les signaux du transducteur 38, du capteur 40 et éventuellement du capteur de température 42 sont envoyés à un contrôleur 50, capable de contrôler l'activation ou l'arrêt du moteur, notamment quand la valeur cible d'un premier paramètre représentatif de la tension axiale cible dans la vis est atteinte.

Le contrôleur 50 est préférentiellement intégré au dispositif 30 de pose, mais il peut être déporté dans un ordinateur portable ou un automate relié au dispositif de pose, notamment pour profiter d'une plus grande puissance de calcul, de l'affichage des signaux et des valeurs mesurées ou calculées en temps réel.

En variante, le dispositif 30 de pose est muni d'un affichage capable d'afficher une ou plusieurs valeurs sélectionnées par un opérateur parmi une pré-sélection de valeurs possibles, comme la tension mesurée, l'intensité ou le couple du moteur mesurée, la tension calculée, ou la température.

Le contrôleur 50 comprend un processeur 44, qui reçoie, amplifie, filtre les signaux émis par les capteurs, un calculateur 46 et une mémoire 48.

Le processeur 44 peut comprendre un convertisseur de signaux analogiques issus des capteurs en signaux numériques.

Le calculateur 46 est configuré pour calculer une variation d'énergie du moteur électrique et une épaisseur L₁ de la structure 12 à serrer, notamment basée sur certaines valeurs issues du processeur 44 et de caractéristiques géométriques de la vis et de l'écrou. Le calculateur peut ainsi comprendre un ou plusieurs algorithmes pour traiter les signaux numériques issus du processeur 44, et en extraire des valeurs spécifiques. Le calculateur peut également être configuré pour corriger des valeurs cibles notamment en fonction de la température dans la vis, si un capteur de température 42 est utilisé au cours de l'installation de la fixation 10.

Le calculateur 46 est également configuré pour comparer des valeurs mesurées ou calculées à des valeurs ou des plages de valeur prédéfinies de couple, d'intensité, de température, de tensions et de caractéristiques géométriques de la vis 20 ou de l'écrou 28, stockées dans la mémoire 48. Le résultat de la comparaison est utilisé par le calculateur pour déterminer une valeur cible du premier paramètre nécessaire, et contrôler en conséquence le moteur 34.

Le calculateur 46 est également configuré pour calculer la distance parcourue par l'écrou 28 sur la portion filetée 26 de la vis depuis une position initiale jusqu'à une position de début de serrage, notamment en fonction de caractéristiques géométriques de la vis et de l'écrou.

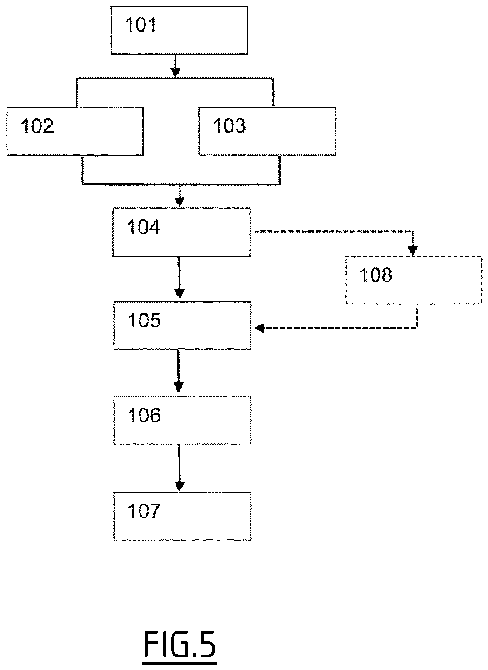

Un procédé 100 d'installation de la fixation 10 dans la structure 12 au moyen du dispositif 30 de pose, va maintenant être décrit. Le procédé est schématisé sur la figure 5.

Préalablement à la mise en oeuvre du procédé 100, la fixation est placée dans la configuration initiale représentée sur la figure 1. Ainsi, la vis 20 est insérée dans le perçage 18 de la structure 12 jusqu'à ce qu'une extrémité 27 de la portion filetée 26 émerge de la face arrière 16. L'écrou 28 est mis en place sur ladite extrémité, en engageant au moins un filet, par exemple en le vissant à la main jusqu'à l'engagement de ces éventuels points de freinage. Dans cet exemple, le dispositif 30 de pose comprend un transducteur 38 logé dans la bague 39 à l'intérieur de la douille 32. La douille est adaptée à entraîner l'écrou 28 en rotation. Le détail de cette partie du dispositif 30 est représenté schématiquement sur les figures 1 à 3.

La vis 20 est maintenue fixe en rotation en insérant une clé de section non circulaire dans une empreinte de même section disposée dans l'extrémité 27 de la fixation (non représenté).

Le procédé d'installation commence avec l'étape 101 de vissage, au cours de laquelle le dispositif 30 de pose est approché de la fixation 10 de sorte que la douille 32 engage les surfaces d'entrainement de l'écrou 28. La bague 39 et le transducteur 38 sont au contact de la surface arrière 29 de l'écrou 28, mais pas de l'extrémité 27 de la vis. Le contact entre la bague 39 et l'écrou 28 est détecté par le dispositif de détection de contact. Le moteur du dispositif 30 est alors activé afin d'entraîner l'écrou en rotation. L'écrou se déplace alors sur la portion filetée 26 de la vis. L'ensemble formé par la bague 39 et le transducteur 38 sont pressés dans la direction longitudinale vers la tête de la vis par le dispositif de maintien, tout au long du procédé d'installation.

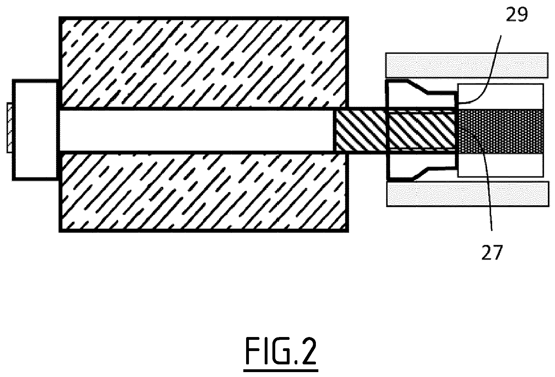

Quand la surface annulaire 29 de l'écrou est coplanaire avec l'extrémité 27 de la vis, comme représenté en figure 2, la bague 39 et le transducteur 38 entrent en contact avec l'extrémité 27 de la vis.

Le moteur continue d'entraîner la douille 32 en rotation, et donc continue d'entraîner l'écrou 28 sur la portion filetée 26 de la vis. La bague 39 et le transducteur 38 restent en appui contre l'extrémité 27 de la vis, maintenus par le dispositif de maintien, puisque le diamètre intérieur de la bague est inférieur au diamètre du taraudage de l'écrou 28. La perte de contact entre la bague 39 et la surface annulaire 29 de l'écrou est détectée par le dispositif de détection de contact. La perte de contact indique la position initiale de l'écrou 28 sur la vis 20.

La distance Lₚ parcourue par l'écrou 28 depuis cette position initiale est alors calculée en temps réel par le calculateur 46 et enregistrée dans la mémoire 48. Par exemple, la distance Lₚ est égale au pas de filetage multiplié par le nombre de tours réalisés par l'écrou depuis sa position initiale. Le nombre de tours est par exemple mesuré au moyen d'un capteur d'angle de rotation de l'arbre 36 du moteur.

Dans une deuxième étape 102, consécutive à la première étape, le transducteur 38 est activé de sorte à émettre des ondes ultrasonores dans l'extrémité 27 de la vis, et recevoir les ondes ultrasonores réfléchies par la surface d'extrémité de la tête 20.

Le processeur 44 est configuré pour mesurer un premier paramètre, représentatif de la tension axiale dans la vis.

Dans un premier mode de réalisation, le transducteur 38 configuré pour émettre des ondes ultrasonores longitudinales ou transversales. Le premier paramètre est le temps de vol acoustique d'une onde ultrasonore longitudinale ou transversale mesuré à des intervalles de temps définis. Le calculateur 46 est ainsi configuré pour calculer la variation dans le temps du temps de vol, ladite variation fournissant une mesure indirecte de la tension dans la vis.

Dans un deuxième mode de réalisation, le transducteur 38 configuré pour émettre des ondes ultrasonores longitudinales. Le premier paramètre est le décalage dans le temps de la fréquence de résonance induite dans la vis par les ondes ultrasonores. Le processeur 44 est ainsi configuré pour mesurer une fréquence de résonance de la vis, et le calculateur 46 est configuré pour calculer le décalage de la fréquence de résonance de la vis, ledit décalage fournissant une mesure indirecte de la tension dans la vis.

Dans un troisième mode de réalisation, le transducteur 38 configuré pour émettre des ondes ultrasonores longitudinales et/ou transversales. Le premier paramètre est le ratio du temps de vol de l'onde ultrasonore sur une épaisseur à serrer, ledit ratio fournissant une mesure indirecte de la tension dans la vis. Le processeur 44 est ainsi configuré pour mesurer le temps de vol d'une onde longitudinale ou transversale, et le calculateur 46 est configuré pour calculer ledit ratio.

Dans une troisième étape 103, simultanée à la deuxième étape 102, les signaux issus du capteur 40 d'intensité ou de couple du moteur sont envoyés au processeur 44, qui traite les signaux et les envoie au calculateur 46. Le calculateur 46 est en outre configuré pour calculer un deuxième paramètre représentatif d'une variation du couple ou de l'intensité du moteur électrique en fonction du temps.

Dans une quatrième étape 104, consécutive aux trois premières étapes, le calculateur détecte un début de serrage correspondant à une génération de la tension dans la vis. Ce début de serrage correspond au moment où l'écrou 28 contacte la surface arrière 16 de la structure 12. La détection du début de serrage peut être réalisée par diverses méthodes et moyens.

Dans une première méthode, le calculateur 46 peut être configuré pour détecter une variation du couple dans le temps ΔC/Δt, ou une variation d'intensité du moteur dans le temps ΔI/Δt, au-dessus d'un seuil prédéfini. Le calculateur identifie l'instant tₛ de début de serrage comme étant le moment où la variation de couple ou d'intensité atteint le seuil prédéfini.

Dans une deuxième méthode, le calculateur 46 peut être configuré pour détecter un changement de pente de la courbe du couple mesuré dans le temps ΔC/Δt, ou de l'intensité mesurée dans le temps ΔI/Δt, par exemple en identifiant le point d'inflexion d'une desdites courbes. Le calculateur est apte à linéariser la pente au-delà du point d'inflexion, le croisement de la droite linéaire et de l'abscisse temporelle indiquant l'instant tₛ de début de serrage.

Quelle que soit la méthode utilisée, le calculateur 46 détermine la distance Lₚ parcourue par l'écrou 28 depuis un instant t₀ correspondant à la position initiale de l'écrou sur la vis (figure 2), jusqu'à un instant tₛ de début de serrage, correspondant au moment où l'écrou 28 entre au contact de la face arrière 16 de la structure 12 (figure 3).

Dans une cinquième étape 105, le calculateur 46 détermine l'épaisseur de structure à serrer en fonction de la distance parcourue par l'écrou définie à l'étape précédente, et en fonction de caractéristiques géométriques de la fixation. Ces caractéristiques comprennent notamment la longueur L₀ de la vis 20, la longueur Lₜ de la tête de vis, la longueur de la portion filetée 26 de la vis, le pas de filetage de la vis, la longueur Lₑ de l'écrou 28, la longueur du taraudage et la distance entre une surface d'extrémité de l'écrou et un point de freinage si l'écrou est freiné, la référence standardisée de la vis et de l'écrou, les matériaux de la vis et de l'écrou, les références normalisées des filetages de la vis et de l'écrou, ...

Ces caractéristiques géométriques peuvent être déjà contenues dans la mémoire 48 du contrôleur.

Dans le cas facultatif où ces caractéristiques sont intégrées dans le ou les marquage 60 sur la vis et/ou l'écrou, un lecteur approprié tel qu'une caméra, capable de lire lesdits marquages et d'envoyer les caractéristiques au calculateur 46, doit être utilisé au préalable, afin que les informations soient connues du calculateur pour effectuer le calcul. L'étape 108 facultative correspondante, comprenant la lecture du marquage et l'identification d'au moins une caractéristique géométrique de la vis et de l'écrou, est figurée en pointillé sur la figure 5.

Dans un mode de réalisation, le calcul de l'épaisseur de structure à serrer L₁ est effectué en retranchant à la longueur de la vis L₀ la distance Lₚ parcourue par l'écrou 28 depuis sa position initiale jusqu'à la position de début de serrage, l'épaisseur Lₜ de la tête 22 de la vis et l'épaisseur Lₑ de l'écrou.

Dans une sixième étape 106, le calculateur 46 détermine une valeur cible du premier paramètre à atteindre en fonction de l'épaisseur à serrer L₁ calculée à l'étape précédente.

Dans un premier mode de réalisation, le calculateur 46 est configuré pour comparer l'épaisseur à serrer L₁ à un ensemble de valeurs d'épaisseur Lᵢ stockées dans la mémoire 48. Chaque épaisseur de l'ensemble de valeurs est associée à une valeur cible du premier paramètre.

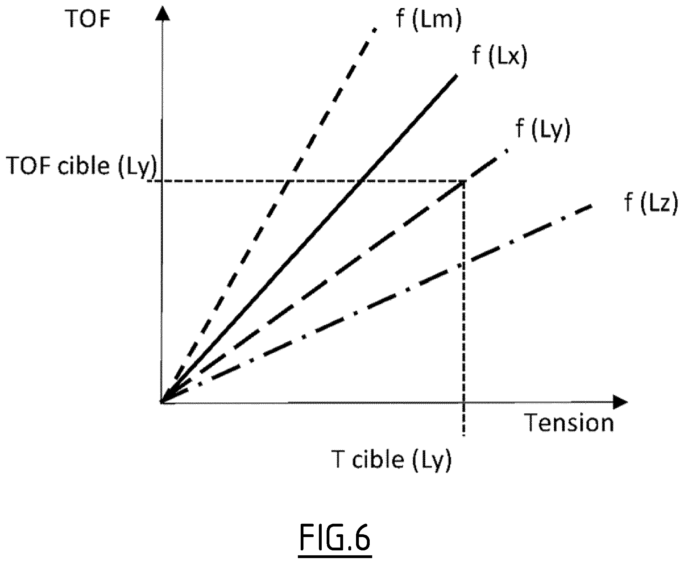

La figure 6 représente sous la forme d'un abaque des valeurs de temps de vol TOF et de tension cibles de quatre fixations 10 identiques insérées dans quatre structures d'épaisseurs différentes, notées respectivement Lm, Lx, Ly et Lz. Par exemple, si le calculateur détermine que l'épaisseur serrée est Ly, alors il déduit que le temps de vol cible est « TOF cible (Ly) », correspondant à une tension cible « T cible (Ly) ».

Dans un second mode de réalisation, le calculateur 46 est configuré pour utiliser l'épaisseur de structure à serrer au moyen d'une équation mathématique stockée dans la mémoire 48, dont l'épaisseur est une variable et dont une ou plusieurs caractéristiques géométriques de la vis sont représentées par une ou plusieurs constantes, afin de calculer la valeur cible du premier paramètre.

L'équation mathématique peut intégrer d'autres variables, comme la température de la vis issue du capteur de température 42, afin d'ajuster la valeur cible du premier paramètre.

Les valeurs discrètes du premier paramètre ou les constantes de l'équation mathématique sont préférentiellement déterminées par un ou des plans d'essais menés avec une ou plusieurs fixations 10 insérées dans au moins deux structures d'épaisseurs différentes, préalablement à l'installation de la fixation 10, dont on mesure le temps de vol et la tension axiale générée dans la vis.

Dans une septième étape 107, le calculateur 50 stoppe le moteur 34 quand le premier paramètre mesuré est égal à la valeur cible déterminée à l'étape 106. La valeur mesurée du premier paramètre peut être enregistrée dans la mémoire 48 en conjonction avec une référence de la vis 20, pour une mesure ultérieure de la tension installée et un éventuel vissage ultérieur de l'écrou 28 si la tension dans la vis a diminué au cours du temps.

Le procédé n'est pas limité à l'exemple décrit ci-dessus. Par exemple, dans un mode de réalisation alternatif, la tête 22 de la vis comporte une forme interne ou externe non circulaire, comme un six pans, permettant à un outil (non représenté) de maintenir la vis fixe en rotation. La tête de vis peut bien sûr être fraisée.

N'importe quel autre moyen que le dispositif de bague 39, de transducteur 38 et de dispositif de détection du contact entre la bague 39 et l'écrou 28 peut être utilisé pour identifier la position initiale de l'écrou sur la vis.

## Revendications

1. Procédé d'installation d'une fixation (10) filetée dans un perçage (18) d'une structure (12), la fixation filetée comprenant une vis (20) et un écrou (28), le procédé comprenant les étapes de :
a) insertion de la vis dans le perçage, et vissage de l'écrou sur la vis,
b) émission simultanée d'ondes ultrasonores dans la fixation, réception d'ondes ultrasonores réfléchies et mesure d'un premier paramètre représentatif d'une variation desdites ondes, ledit premier paramètre fournissant une mesure indirecte d'une tension axiale dans la vis,
c) arrêt du vissage quand une valeur cible du premier paramètre est atteinte,
**caractérisé en ce que** le procédé comporte en outre les étapes suivantes :
d) détermination d'une épaisseur (L₁) de structure à serrer, ladite détermination comprenant un calcul de ladite épaisseur (L₁) à l'aide d'un calculateur (46) ; et
e) détermination de la valeur cible du premier paramètre en fonction de l'épaisseur (L₁) de structure à serrer et de caractéristiques géométriques de la fixation (10).

2. Procédé selon la revendication 1, dans lequel le premier paramètre est choisi parmi : un temps de vol d'une onde ultrasonore longitudinale ; un décalage de fréquence de résonance de la vis ; et un ratio du temps de vol d'une onde ultrasonore longitudinale ou transversale sur l'épaisseur (L₁) de structure à serrer.

3. Procédé selon la revendication 1, dans lequel les caractéristiques géométriques de la fixation sont choisies parmi : une longueur (L₀) de la vis (20), une longueur d'une portion filetée de la vis, un pas de filetage de la vis, une longueur d'écrou (Lₑ), une longueur de chambrage d'écrou, une longueur de taraudage de l'écrou et une distance entre une surface d'extrémité de l'écrou et au moins un point de freinage.

4. Procédé selon la revendication 1, dans lequel la détermination de la valeur cible du premier paramètre comprend la comparaison de l'épaisseur de structure à un ensemble de valeurs d'épaisseur, ledit ensemble de valeurs d'épaisseur étant associé à un ensemble de valeurs cibles du premier paramètre pour une vis donnée, correspondant à un ensemble de tensions cibles pour une vis donnée.

5. Procédé selon la revendication 1 ou 2, dans lequel la détermination de l'épaisseur (L₁) de structure comprend une étape de détection d'un début de serrage de la structure (12), correspondant à l'apparition d'une tension axiale dans la vis (20).

6. Procédé selon la revendication 5, dans lequel l'étape de vissage est effectuée avec un dispositif (30) de pose muni d'un moteur (34) électrique, le procédé comprenant en outre : la mesure d'un deuxième paramètre représentatif d'une variation d'énergie du moteur électrique en fonction du temps ; et la détection du début de serrage, ledit début de serrage correspondant à une variation prédéterminée du deuxième paramètre.

7. Procédé selon la revendication 6, dans lequel le deuxième paramètre est choisi parmi une intensité du moteur électrique et un couple d'un arbre moteur.

8. Procédé selon la revendication 1 ou 2, dans lequel la détermination de l'épaisseur (L₁) de structure comprend une étape de détection de la position initiale de l'écrou (28) sur la vis (20).

9. Procédé selon la revendication 8, dans lequel l'étape de détection de la position initiale de l'écrou comprend les étapes suivantes :
- Mise en contact d'un élément métallique annulaire (39) avec une surface annulaire (29) de l'écrou (28), un diamètre intérieur de l'élément métallique annulaire étant inférieur à un diamètre intérieur de la surface annulaire de l'écrou,
- Détection d'un contact entre l'élément métallique annulaire et la surface annulaire de l'écrou,
- Entrainement en rotation de l'écrou sur la portion filetée (26) de la vis, et application d'une pression sur l'élément métallique annulaire de sorte à maintenir le contact avec la surface annulaire de l'écrou,
- Détection d'une perte de contact entre l'élément métallique annulaire et la surface annulaire de l'écrou dès qu'une extrémité (27) de la portion filetée (26) traverse le diamètre intérieur de la surface annulaire (29) de l'écrou, la détection de la perte de contact correspondant à la position initiale de l'écrou.

10. Procédé selon la revendication 1, comprenant en outre la surveillance de la température dans la vis (20), et l'ajustement de la valeur cible du premier paramètre en fonction de la température.

11. Procédé selon la revendication 1, dans lequel au moins un parmi la vis (20) et l'écrou (28) comprend un marquage contenant au moins un identifiant ou une caractéristique géométrique de ladite vis ou ledit écrou, le procédé d'installation comprenant en outre une étape (108) de lecture du marquage et l'identification d'au moins l'identifiant ou la caractéristique géométrique de la vis et/ou de l'écrou, ladite étape de lecture étant réalisée avant l'étape e).
